# EUROPEAN PATENT APPLICATION

(11) **EP 4 546 910 A1**
(43) Date of publication of application: **30.04.2025**
(21) Application number: 22947451.5
(22) Date of filing: 24.06.2022
(51) Int. Cl.: H04W 72/04, H04W 24/08

(54) **INDICATION INFORMATION CONFIGURATION METHODS AND APPARATUSES, AND DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2022/101333
(87) International publication number: WO 2023/245685

(57) **Abstract**

Indication information configuration methods and apparatuses, and a device and a storage medium. An indication information configuration method comprises: sending one or more pieces of indication information to a terminal device (12), wherein the indication information indicates a configuration of a measurement gap associated with an object to be subjected to measurement (201). By means of configuring, for the terminal device (12), a plurality of measurement gaps associated with an object to be subjected to measurement, the terminal device (12) is suitable for the measurement of signals of different cells to be subjected to measurement in an NTN system, such that the situation where a reference signal of a certain satellite cell to be subjected to measurement cannot be measured due to the terminal device (12) not being suitable for the measurement of the signals of said different cells in the NTN system because only one measurement gap associated with said object is configured for the terminal device (12) is avoided, thereby ensuring the measurement stability for said object in the NTN system.

## Description

### FIELD

The present invention relates to the field of communication technology, in particular to an indication information configuration method, an apparatus, a device and a storage medium.

### BACKGROUND

In a Non-Terrestrial Networks (NTN) system, usually a terminal device needs to measure a to-be-measured reference signal in a neighboring satellite cell.

However, in the NTN system, satellites corresponding to different satellite cells may be different, and one to-be-measured reference signal may correspond to a plurality of cells of different satellites. Due to different distances between the satellites and the terminal device, in a case that one to-be-measured reference signal corresponds to the plurality of cells of different satellites, a transmission delay for receiving, by the terminal device, the to-be-measured reference signal sent by different satellite cells is relatively large. Based on the above, if one measurement gap is configured for only one to-be-measured reference signal like in a Terrestrial Networks (TN) system, it cannot be adapted to a measurement of the same to-be-measured reference signal in different satellite cells in the NTN system, and such a circumstance where "a time when the to-be-measured reference signal in a certain satellite cell is received by the terminal device is not in a measurement window of the configured measurement gap and thereby it is impossible to measure the to-be-measured reference signal in different satellite cells" may occur.

Hence, for the NTN system, there is a need to introduce a measurement gap configuration method, so as to be adapted to the measurement of the to-be-measured reference signal for different satellites in a NTN.

### SUMMARY

An object of the present invention is to provide an indication information configuration method, an apparatus, a device and a storage medium, so as to solve the technical problem in the related art where it is impossible to measure a reference signal in different to-be-measured neighboring satellite cells in the NTN system.

In a first aspect, the present invention provides in some embodiments an indication information configuration method, executed by a network device, including: sending one or more pieces of indication information to a terminal device, wherein the one or more pieces of indication information indicate one or more measurement gaps associated with a to-be-measured object.

In the embodiments of the present invention, a method for configuring a plurality of measurement gaps associated with the to-be-measured object for the terminal device is provided, so as to be adapted to a measurement of signals in different to-be-measured cells in a NTN system, prevent the occurrence of such a circumstance where "only one measurement gap associated with the to-be-measured object is configured for the terminal device, so it cannot be adapted to the measurement of the signals in different to-be-measured cells in the NTN system and thereby a reference signal in a certain to-be-measured satellite cell cannot be measured", and ensure the measurement stability of the to-be-measured object in the NTN system.

In a second aspect, the present invention provides in some embodiments an indication information configuration method, executed by a terminal device, including: receiving one or more pieces of indication information sent by a network device, wherein the one or more pieces of indication information indicate one or more measurement gaps associated with a to-be-measured object.

In a third aspect, the present invention provides in some embodiments a communication apparatus, configured in a network device, including: a transceiver module configured to send one or more pieces of indication information to a terminal device, wherein the one or more pieces of indication information indicate one or more measurement gaps associated with a to-be-measured object.

In a fourth aspect, the present invention provides in some embodiments a communication apparatus, configured in a terminal device, including: a transceiver module configured to receive one or more pieces of indication information sent by a network device, wherein the one or more pieces of indication information indicate one or more measurement gaps associated with a to-be-measured object.

In a fifth aspect, the present invention provides in some embodiments a communication apparatus, including a processor. The processor calls a computer program in a memory to implement the indication information configuration method in the first aspect.

In a sixth aspect, the present invention provides in some embodiments a communication apparatus, including a processor. The processor calls a computer program in a memory to implement the indication information configuration method in the second aspect.

In a seventh aspect, the present invention provides in some embodiments a communication apparatus, including a processor and a memory. The memory stores therein a computer program, and the processor executes the computer program stored in the memory to implement the indication information configuration method in the first aspect.

In an eighth aspect, the present invention provides in some embodiments a communication apparatus, including a processor and a memory. The memory stores therein a computer program, and the processor executes the computer program stored in the memory to implement the indication information configuration method in the second aspect.

In a ninth aspect, the present invention provides in some embodiments a communication apparatus including a processor and an interface circuit. The interface circuit is configured to receive a code instruction and transmit the code instruction to the processor, and the processor is configured to execute the code instruction to implement the indication information configuration method in the first aspect.

In a tenth aspect, the present invention provides in some embodiments a communication apparatus including a processor and an interface circuit. The interface circuit is configured to receive a code instruction and transmit the code instruction to the processor, and the processor is configured to execute the code instruction to implement the indication information configuration method in the second aspect.

In an eleventh aspect, the present invention provides in some embodiments a communication system, including the communication apparatus in the third aspect and the communication apparatus in the fourth aspect, or including the communication apparatus in the fifth aspect and the communication apparatus in the sixth aspect, or including the communication apparatus in the seventh aspect and the communication apparatus in the eighth aspect, or including the communication apparatus in the ninth aspect and the communication apparatus in the tenth aspect.

In a twelfth aspect, the present invention provides in some embodiments a computer-readable storage medium storing therein an instruction used by the network device or the terminal device. The instruction is executed so that the network device implements the indication information configuration method in the first aspect, and/or the terminal device implements the indication information configuration method in the second aspect.

In a thirteenth aspect, the present invention provides in some embodiments a computer program product including a computer program. The computer program is executed by a computer to implement the indication information configuration methods in the first aspect and the second aspect.

In a fourteenth aspect, the present invention provides in some embodiments a chip system including at least one processor and an interface, and configured to support a network device to achieve functions involved in the indication information configuration method in the first aspect, and/or support a terminal device to achieve functions involved in the indication information configuration method in the second aspect, e.g., determining or processing at least one of data or information involved in the above indication information configuration method. In a possible design, the chip system further includes a memory configured to store therein a computer program and data desired for a source secondary node. The chip system includes a chip, or includes a chip and other discrete elements.

In a fifteenth aspect, the present invention provides in some embodiments a computer program. The computer program is executed by a computer to implement the indication information configuration methods in the first aspect and the second aspect.

### BRIEF DESCRIPTION OF THE DRAWINGS

The above-mentioned and/or other aspects and advantages of the present invention may become apparent and easily understandable in the following description in conjunction with the drawings:
FIG. 1 is a schematic view showing architecture of a communication system according to an embodiment of the present invention;
FIG. 2 is a flow chart of an indication information configuration method according to an embodiment of the present invention;
FIG. 3 is another flow chart of the indication information configuration method according to an embodiment of the present invention;
FIG. 4 is yet another flow chart of the indication information configuration method according to an embodiment of the present invention;
FIG. 5 is still yet another flow chart of the indication information configuration method according to an embodiment of the present invention;
FIG. 6 is still yet another flow chart of the indication information configuration method according to an embodiment of the present invention;
FIG. 7a is still yet another flow chart of the indication information configuration method according to an embodiment of the present invention;
FIG. 7b is still yet another flow chart of the indication information configuration method according to an embodiment of the present invention;
FIG. 7c is still yet another flow chart of the indication information configuration method according to an embodiment of the present invention;
FIG. 8a is a flow chart of the indication information configuration method according to an embodiment of the present invention;
FIG. 8b is a flow chart of the indication information configuration method according to an embodiment of the present invention;
FIG. 8c is a flow chart of the indication information configuration method according to an embodiment of the present invention;
FIG. 8d is a flow chart of the indication information configuration method according to an embodiment of the present invention;
FIG. 8e is a flow chart of the indication information configuration method according to an embodiment of the present invention;
FIG. 9a is a flow chart of the indication information configuration method according to an embodiment of the present invention;
FIG. 9b is a flow chart of the indication information configuration method according to an embodiment of the present invention;
FIG. 10 is a flow chart of the indication information configuration method according to an embodiment of the present invention;
FIG. 11 is a flow chart of the indication information configuration method according to an embodiment of the present invention;
FIG. 12 is another flow chart of the indication information configuration method according to an embodiment of the present invention;
FIG. 13 is yet another flow chart of the indication information configuration method according to an embodiment of the present invention;
FIG. 14 is still yet another flow chart of the indication information configuration method according to an embodiment of the present invention;
FIG. 15 is still yet another flow chart of the indication information configuration method according to an embodiment of the present invention;
FIG. 16 is still yet another flow chart of the indication information configuration method according to an embodiment of the present invention;
FIG. 17a is still yet another flow chart of the indication information configuration method according to an embodiment of the present invention;
FIG. 17b is still yet another flow chart of the indication information configuration method according to an embodiment of the present invention;
FIG. 17c is still yet another flow chart of the indication information configuration method according to an embodiment of the present invention;
FIG. 18a is a flow chart of the indication information configuration method according to an embodiment of the present invention;
FIG. 18b is a flow chart of the indication information configuration method according to an embodiment of the present invention;
FIG. 18c is a flow chart of the indication information configuration method according to an embodiment of the present invention;
FIG. 18d is a flow chart of the indication information configuration method according to an embodiment of the present invention;
FIG. 18e is a flow chart of the indication information configuration method according to an embodiment of the present invention;
FIG. 19a is a flow chart of the indication information configuration method according to an embodiment of the present invention;
FIG. 19b is a flow chart of the indication information configuration method according to an embodiment of the present invention;
FIG. 20 is a flow chart of the indication information configuration method according to an embodiment of the present invention;
FIG. 21 is a schematic view showing a communication apparatus according to an embodiment of the present invention;
FIG. 22 is another schematic view showing the communication apparatus according to an embodiment of the present invention;
FIG. 23 is a block diagram of a user equipment according to an embodiment of the present invention; and
FIG. 24 is a block diagram of a network side device according to an embodiment of the present invention.

### DETAILED DESCRIPTION

The present invention will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present invention, and in contrast, they are merely examples of devices and methods consistent with some aspects of the embodiments of the present invention as specified in the appended claims.

The terms used in embodiments of the present invention are for illustrative purposes only, but do not intend to limit the present invention. Such a singular form as "one" or "the" used in the embodiments of the present invention and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present invention, first information may also be called as second information, and similarly second information may also be called as first information. Depending on the context, such a word as "if" may be construed as "in a case that ...", "in the case that ..." or "in response to determining that ...".

The embodiments of the present invention will be described hereinafter in details, and examples are shown in the drawings. Identical or similar reference numbers represent an identical or similar element. The following embodiments described with reference to the drawings are for illustrative purposes only, but shall not be used to limit the scope of the present invention.

For ease of understanding, terms involved in the embodiments of the present invention will be introduced at first.

### 1. Measurement gap

It is a time period within which a measurement may be performed by a terminal device.

### 2. NTN

Typically, it uses a technology in which, e.g., satellites and High-Altitude Platforms (HAP) participate in network deployment.

It should be appreciated that, in the present invention, an indication information configuration method provided in any embodiment may be executed separately, and any implementation mode in the embodiments may also be executed separately, or executed in combination with the other embodiments or any possible implementation method in the other embodiments, or executed in combination with any technical solution in the related art.

In order to understand the indication information configuration method disclosed in the embodiments of the present invention in a better manner, an available communication system will be described hereinafter at first.

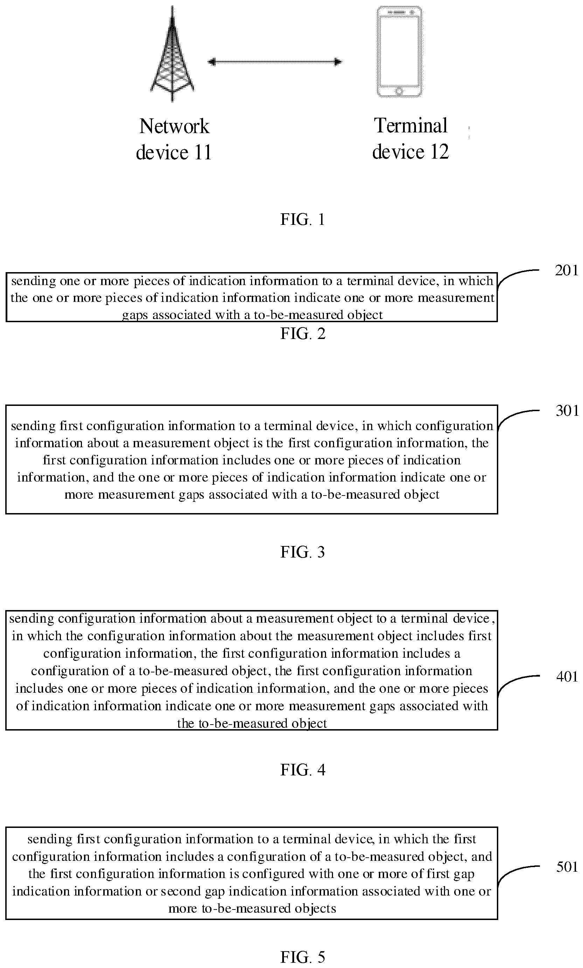

FIG. 1 is a schematic view showing architecture of a communication system according to an embodiment of the present invention. The communication system includes, but not limited to, one network device and one terminal device. Quantities and forms of the devices in FIG. 1 are for illustrative purposes only, but shall not be construed as limiting the embodiments of the present invention. In actual use, the communication system may include two or more network devices and two or more terminal devices. For example, as shown in FIG. 1, the communication system includes one network device 11 and one terminal device 12.

It should be appreciated that, the technical solutions in the embodiments of the present invention may be applied to various communication systems, e.g., a Long Term Evolution (LTE) system, a 5^{th}-Generation (5G) mobile communication system, a 5G New Radio (NR) system, or any novel mobile communication system that may occur in the future.

In the embodiments of the present invention, the network device 11 is an entity at a network side for sending or receiving a signal. For example, the network device 11 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The network device in the embodiments of the present invention may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present invention, the terminal device 12 is an entity at a user side for receiving or sending a signal, e.g., a mobile phone. The terminal device may also be called as terminal, User Equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal device, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present invention, a specific technology adopted by the terminal device and a specific device form thereof will not be particularly defined.

It should be appreciated that, the communication system described herein is used to describe the technical solutions provided in the embodiments of the present invention in a clearer manner, but shall not be construed as limiting the technical solutions. It is obvious for a person skilled in the art that, along with the evolution of the system architecture as well as the emergence of new service scenarios, the technical solutions are also applicable to similar technical problems.

An indication information configuration method, an apparatus, a device and a storage medium provided in the embodiments of the present invention will be described hereinafter in details in conjunction with the drawings.

FIG. 2 is a flow chart of an indication information configuration method according to an embodiment of the present invention, and this method is executed by a network device. As shown in FIG. 2, the indication information configuration method includes the following step.

Step 201: one or more pieces of indication information are sent to a terminal device. The one or more pieces of indication information indicate one or more measurement gaps associated with a to-be-measured object.

In an embodiment of the present invention, the to-be-measured object includes one MeasObject (MO). A configuration of the MO includes a configuration of at least one of following reference signals: a Synchronization Signal Block (SSB) or a Channel State Information Reference Signal (CSI-RS). In another embodiment of the present invention, the above to-be-measured object also includes different reference signals in one MO.

In an embodiment of the present invention, the indication information may be a measurement identity corresponding to each measurement gap. Each measurement gap is provided with a corresponding measurement identity included in a gap configuration, and configuration information about the gap specifically includes parameter information, e.g., period, duration, offset, and measurement gap timing advance. The terminal device may measure the to-be-measured object using the measurement gap.

It should be appreciated that, in an embodiment of the present invention, in a case that the one or more pieces of indication information indicate the one or more measurement gaps associated with the to-be-measured object, the one or more pieces of indication information indicate a measurement gap configuration associated with the to-be-measured object.

Further, in an embodiment of the present invention, the one or more pieces of indication information are configured for the to-be-measured object and sent to the terminal device, so as to indicate one or more measurement gaps associated with the to-be-measured object to the terminal device.

In an embodiment of the present invention, the network device may associate the one or more pieces of indication information with each to-be-measured object, so as to indicate one or more measurement gaps associated with each to-be-measured object.

In another embodiment of the present invention, the network device does not need to associate one or more pieces of indication information with each to-be-measured object, and it only associates one or more pieces of indication information with a part of the to-be-measured objects, so as to indicate one or more measurement gaps associated with the part of to-be-measured objects.

In yet another embodiment of the present invention, the network device may only associate one or more pieces of indication information with a certain to-be-measured object, so as to indicate one or more measurement gaps associated with the to-be-measured object.

In an embodiment of the present invention, after the network device sends the one or more pieces of indication information to the terminal device, in a case that the terminal device needs to measure a certain to-be-measured object, the terminal device specifically determines the measurement gap associated with the to-be-measured object based on the indication information corresponding to the to-be-measured object, and then measures the to-be-measured object based on the measurement gap.

It should be appreciated that, in an embodiment of the present invention, in a case that the to-be-measured object includes reference signals in the MO, same reference signals having the same frequency in different to-be-measured objects may be associated with the same measurement gap.

For example, it is presumed that a MO1 includes two reference signals SSB#1 and CSI-RS#1, and a MO2 includes two reference signals SSB#2 and CSI-RS#2. SSB#1 is a to-be-measured object 1, CSI-RS#1 is a to-be-measured object 2, SSB#2 is a to-be-measured object 3, and CSI-RS#2 is a to-be-measured object 4. At this time, in a case that SSB#1 and SSB#2 have the same frequency, same indication information may be configured for the to-be-measured object 1 and the to-be-measured object 2, so as to associate them with the same measurement gap.

It should be appreciated that, the one or more pieces of indication information may have various specific implementation forms, which will not be particularly defined herein. For example, in an embodiment of the present invention, the one or more pieces of indication information specifically include at least one of first gap indication information or second gap indication information. In another embodiment of the present invention, the one or more pieces of indication information specifically include a gap indication list, and the gap indication list includes one or more pieces of third gap indication information. In yet another embodiment of the present invention, the one or more pieces of indication information specifically include one or more pieces of fourth gap indication information. Relevant description about the first gap indication information, the second gap indication information, the gap indication list, the third gap indication information and the fourth gap indication information will be given subsequently.

Further, in an embodiment of the present invention, the above measurement gap may be a per UE gap configuration. In another embodiment of the present invention, the above measurement gap may be a per FR gap configuration. In an embodiment of the present invention, the per FR gap configuration includes a gap configuration for FR1 and a gap configuration for FR2. In a case that a plurality of measurement gaps needs to be configured simultaneously in the NTN system, a plurality of per UE gap configurations is supported to be configured simultaneously, or a plurality of per FR1 gap configurations is supported to be configured simultaneously, or a plurality of per FR2 gap configurations is supported to be configured simultaneously, or the per FR1 gap configuration and the per FR2 gap configuration are supported to be configured simultaneously. However, the per UE gap configuration and the per FR1 gap configuration are not supported to be configured simultaneously, or the per UE gap configuration and the per FR2 gap configuration are not supported to be configured simultaneously.

In addition, in an embodiment of the present invention, the above-mentioned to-be-measured object may also be called as frequency layer.

In the embodiments of the present invention, the frequency layer is defined as follows.
1. A Positioning Reference Signal (PRS) measurement may be one frequency layer.
2. A SSB or LTE frequency of each measurement is considered as a frequency layer.
3. A measurement of CSI-RS resources having the same center frequency is considered as a frequency layer. It should be appreciated that, there may exist such a circumstance where "a plurality of measurement objects includes CSI-RS resources having the same center frequency".
4. One MO includes a SSB and/or a CSI-RS, and measurements of the SSB and the CSI-RS in one MO are considered as different frequency layers.

For example, in a case that one MO includes one reference signal, the MO may be a frequency layer.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 3 is a flow chart of an indication information configuration method according to an embodiment of the present invention, and this method is executed by a network device. As shown in FIG. 3, the indication information configuration method includes the following step.

Step 301: first configuration information is sent to a terminal device, the first configuration information includes a configuration of a to-be-measured object, indication information is included in the first configuration information, and the indication information indicates a measurement gap associated with the to-be-measured object.

In an embodiment of the present invention, the first configuration information includes configures of one or more to-be-measured objects, and the one or more to-be-measured objects are associated with one or more pieces of indication information. In an embodiment of the present invention, each to-be-measured object in the first configuration information is associated with one or more pieces of indication information. In another embodiment of the present invention, only a part of to-be-measured objects in the first configuration information are associated with one or more pieces of indication information. In yet another embodiment of the present invention, only one certain to-be-measured object in the first configuration information is associated with one or more pieces of indication information.

Further, it should be appreciated that, in an embodiment of the present invention, the configuration of the to-be-measured object specifically includes such information as time/frequency-domain resources and transmission period of the to-be-measured object. In an embodiment of the present invention, in a case that the to-be-measured object is a SSB, the configuration of the to-be-measured object includes mobility-related SSB configuration information. The terminal device receives the to-be-measured object based on the configuration of the to-be-measured object, and then measures the to-be-measured object based on the measurement gap associated with the to-be-measured object.

Other detailed description about Step 301 may refer to that in the above embodiments, and thus will not be particularly described herein again.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 4 is a flow chart of an indication information configuration method according to an embodiment of the present invention, and this method is executed by a network device. As shown in FIG. 4, the indication information configuration method includes the following step.

Step 401: configuration information about a measurement object is sent to a terminal device, the configuration information about the measurement object is first configuration information, the first configuration information includes a configuration of a to-be-measured object, one or more pieces of indication information are included in the first configuration information, and the one or more pieces of indication information indicate one or more measurement gaps associated with the to-be-measured object.

Detailed description about the first configuration information in Step 401 may refer to that in the above-mentioned embodiments, and thus will not be particularly described herein again.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 5 is a flow chart of an indication information configuration method according to an embodiment of the present invention, and this method is executed by a network device. As shown in FIG. 5, the indication information configuration method includes the following step.

Step 501: first configuration information is sent to a terminal device, the first configuration information includes a configuration of a to-be-measured object, and the first configuration information is configured with one or more of first gap indication information or second gap indication information associated with the one or more to-be-measured objects respectively.

Relevant description about the first configuration information and the configuration of the to-be-measured object may refer to that in the above-mentioned embodiments.

In an embodiment of the present invention, both the first gap indication information and the second gap indication information may be measurement identities of the measurement gaps.

In an embodiment of the present invention, both the first gap indication information and the second gap indication information may be used to configure the measurement gaps for NTN measurement.

In an embodiment of the present invention, the measurement gaps indicated by the first gap indication information and the second gap indication information may be used for a measurement of a NTN.

In another embodiment of the present invention, the first gap indication information may also be used to configure and indicate a gap in concurrent gaps, i.e., the measurement gap indicated by the first gap indication information may also be used for a measurement of a TN, in addition to the measurement of the NTN.

It should be appreciated that, in an embodiment of the present invention, the to-be-measured object may be associated with one or more of the first gap indication information or the second gap indication information. For example, the to-be-measured object may be only associated with the first gap indication information, or the to-be-measured object may be associated with both the first gap indication information and the second gap indication information.

In an embodiment of the present invention, in a case that a certain to-be-measured object is associated with the first gap indication information rather than the second gap indication information, the terminal device measures the to-be-measured object based on the measurement gap indicated by the first gap indication information.

In another embodiment of the present invention, in a case that a certain to-be-measured object is not associated with the first gap indication information, the to-be-measured object may not be associated with the second gap indication information, or even if the to-be-measured object is associated with the second gap indication information, the second gap indication information may be omitted.

In addition, it should be appreciated that, in an embodiment of the present invention, mainly the one or more to-be-measured objects in the first configuration information are associated with the first gap indication information and/or the second gap indication information. To be specific, each to-be-measured object in the first configuration information is associated with the first gap indication information and/or the second gap indication information, or a part of to-be-measured objects in the first configuration information are associated with the first gap indication information and/or the second gap indication information, or one to-be-measured object in the first configuration information is associated with the first gap indication information and/or the second gap indication information.

Further, in an embodiment of the present invention, in a case that the to-be-measured object is a reference signal in the MO, same reference signals having the same frequency in different to-be-measured objects are associated with the same measurement gap.

For example, it is presumed that a MO1 includes two reference signals SSB#1 and CSI-RS#1, and a MO2 includes two reference signals SSB#2 and CSI-RS#2. SSB#1 is a to-be-measured object 1, CSI-RS#1 is a to-be-measured object 2, SSB#2 is a to-be-measured object 3, and CSI-RS#2 is a to-be-measured object 4. At this time, in a case that SSB#1 and SSB#2 have the same frequency, the to-be-measured object 1 and the to-be-measured object 2 are associated with the same first gap indication information and/or second gap indication information, so that the to-be-measured object 1 and the to-be-measured object 2 are associated with the same measurement gap.

Further, in an embodiment of the present invention, the first configuration information including the first gap indication information and/or the second gap indication information may be configuration information about a measurement object. In an embodiment of the present invention, the first gap indication information and the second gap indication information are configured in the configuration information (MeasObjectNR) about the measurement object using a following first code snippet.

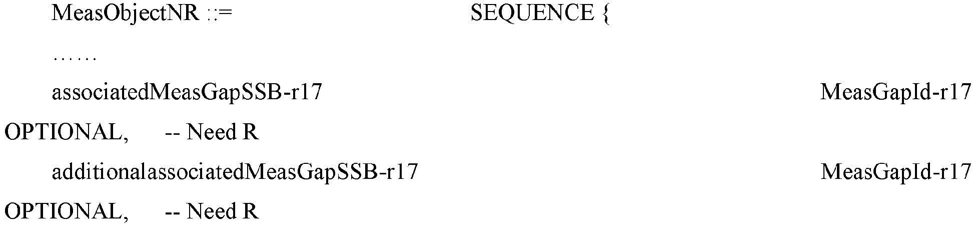

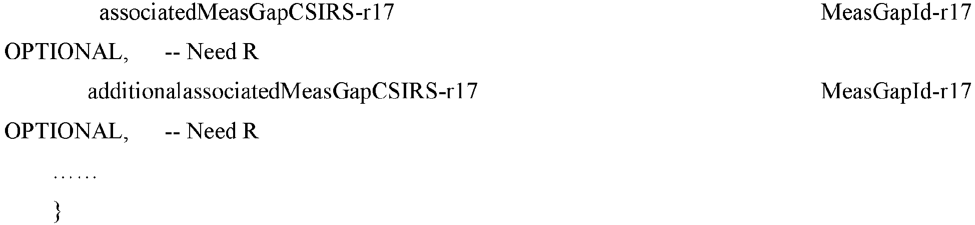

As shown in the above code, associatedMeasGapSSB-r17 is the first gap indication information, and additionalassociatedMeasGapSSB-r17 is the second gap indication information. In the above code, OPTIONAL refers to that a parameter is optional, and Need R refers to a corresponding Need Code.

It should be appreciated that, names of fields and Information Elements (IEs) in the above code are not particularly defined, and any fields and IEs having similar functions shall also fall within the scope of the present invention.

It should be appreciated that, the above code is merely for illustrative purposes, and the fields included therein are optional. Mandatory or conditional fields will not be particularly defined herein, and corresponding Need Code will not be particularly defined either, which also fall within the scope of the present invention.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

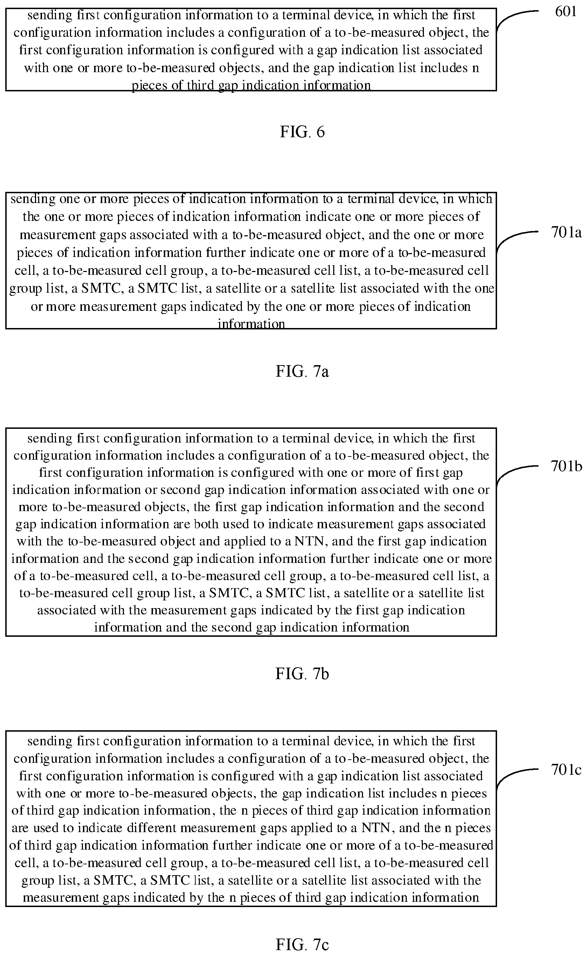

FIG. 6 is a flow chart of an indication information configuration method according to an embodiment of the present invention, and this method is executed by a network device. As shown in FIG. 6, the indication information configuration method includes the following step.

Step 601: first configuration information is sent to a terminal device, the first configuration information includes a configuration of a to-be-measured object, the first configuration information is configured with a gap indication list associated with one or more of to-be-measured objects, and the gap indication list includes n pieces of third gap indication information.

For example, each entry in the gap indication list corresponds to one piece of third gap indication information.

Relevant description about the first configuration information and the configuration of the to-be-measured object may refer to that mentioned in the above embodiments.

In an embodiment of the present invention, n is a positive integer, and n is smaller than or equal to a maximum quantity of measurement gaps supported to be configured simultaneously in the NTN. For example, n=1 or 2, which will not be particularly defined herein. The n pieces of third gap indication information are all measurement identities of the measurement gaps, and they are all used to configure the measurement gaps for the NTN measurement, i.e., the measurement gaps indicated by the n pieces of third gap indication information are used for the measurement of the NTN. Different pieces of third gap indication information are used to indicate different measurement gaps.

It should be appreciated that, in an embodiment of the present invention, in a case that the to-be-measured object is configured with the associated gap indication list, it is unnecessary to associate the to-be-measured object with the first gap indication information and/or the second gap indication information. In another embodiment of the present invention, in a case that the to-be-measured object is configured with the associated gap indication list and it is further associated with the first gap indication information and/or the second gap indication information, the first gap indication information and the second gap indication information are omitted. In yet another embodiment of the present invention, the to-be-measured object is associated with the first gap indication information and/or the second gap indication information only in a case that the to-be-measured object is not configured with the associated gap indication list. In still yet embodiment of the present invention, the to-be-measured object is configured with the associated gap indication list only in a case that the to-be-measured object is not configured with the associated first gap indication information and second gap indication information.

In an embodiment of the present invention, mainly the one or more to-be-measured objects in the first configuration information are associated with the gap indication list. To be specific, each to-be-measured object in the first configuration information is associated with the gap indication list, or a part of to-be-measured objects in the first configuration information are associated with the gap indication list, or one to-be-measured object in the first configuration information is associated with the gap indication list.

Further, in an embodiment of the present invention, in a case that the to-be-measured object is a reference signal in the MO, same reference signals having the same frequency in different to-be-measured objects are associated with the same measurement gap.

For example, a MO1 includes two reference signals SSB#1 and CSI-RS#1, and a MO2 includes two reference signals SSB#2 and CSI-RS#2. SSB#1 is a to-be-measured object 1, CSI-RS#1 is a to-be-measured object 2, SSB#3 is a to-be-measured object 3, and CSI-RS#2 is a to-be-measured object 4. At this time, in a case that SSB#1 and SSB#2 have the same frequency, the to-be-measured object 1 and the to-be-measured object 2 are configured with the same gap indication list, so that the to-be-measured object 1 and the to-be-measured object 2 are associated with the same measurement gap.

Further, in an embodiment of the present invention, the first configuration information including the gap indication list may be configuration information about a measurement object. The gap indication list is configured in the configuration information (MeasObjectNR) about the measurement object using a following second code snippet.

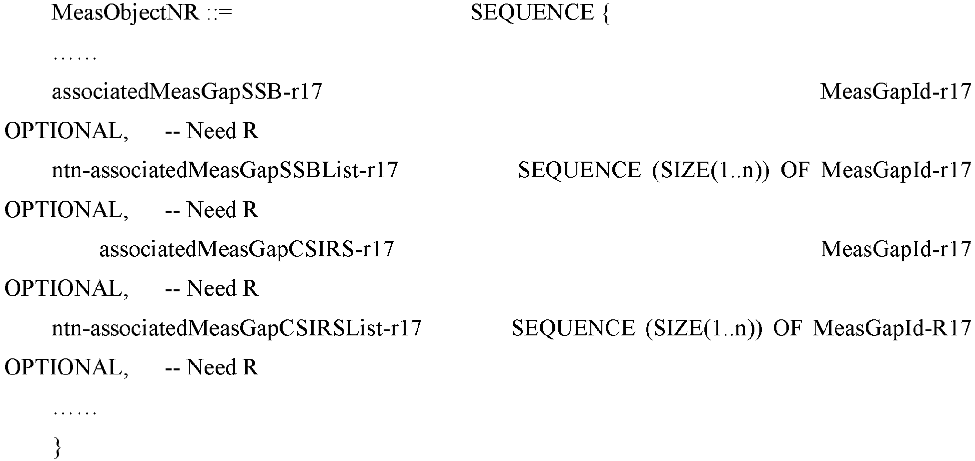

As shown in the above code, associatedMeasGapSSB-r17 is the first gap indication information, and ntn-associatedMeasGapSSBList is the gap indication list. In the above code, OPTIONAL refers to that a parameter is optional, and Need R refers to a corresponding Need Code.

It should be appreciated that, names of fields and IEs in the above code are not particularly defined, and any fields and IEs having similar functions shall also fall within the scope of the present invention.

It should be appreciated that, the above code is merely for illustrative purposes, and the fields included therein are optional. Mandatory or conditional fields will not be particularly defined herein, and corresponding Need Code will not be particularly defined either, which also fall within the scope of the present invention.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 7a is a flow chart of an indication information configuration method according to an embodiment of the present invention, and this method is executed by a network device. As shown in FIG. 7a, the indication information configuration method includes the following step.

Step 701a: one or more pieces of indication information are sent to a terminal device, and the one or more pieces of indication information indicate one or more measurement gaps associated with a to-be-measured object. The one or more pieces of indication information further indicate one or more of a to-be-measured cell, a to-be-measured cell group, a to-be-measured cell list, a to-be-measured cell group list, a Synchronization Signal Block Measurement Timing Configuration (SMTC), a SMTC list, a satellite, or a satellite list associated with the one or more measurement gaps indicated by the one or more pieces of indication information.

Relevant description about the indication information and the to-be-measured object may refer to that mentioned in the above embodiments.

In an embodiment of the present invention, in a case that the indication information further includes one or more of the to-be-measured cell, the to-be-measured cell group, the to-be-measured cell list, the to-be-measured cell group list, the SMTC, the SMTC list, the satellite, or the satellite list associated with the one or more measurement gaps indicated by the one or more pieces of indication information, e.g., in a case that the to-be-measured object to be measured by the terminal device corresponds to one or more of the to-be-measured cell, the to-be-measured cell group, the to-be-measured cell list, the to-be-measured cell group list, the SMTC, the SMTC list, the satellite or the satellite list, the to-be-measured object is measured using the one or more measurement gaps indicated by the one or more pieces of indication information.

For example, the one or more pieces of indication information may be one or more of the first gap indication information, the second gap indication information or the third gap indication information in the above embodiments.

For example, in a case that the indication information further indicates the to-be-measured cell list, in an embodiment of the present invention, the indication information is configured using a following third code snippet, so as to indicate the measurement gap associated with the to-be-measured object and further indicate the to-be-measured cell list associated with the measurement gap indicated by the indication information.

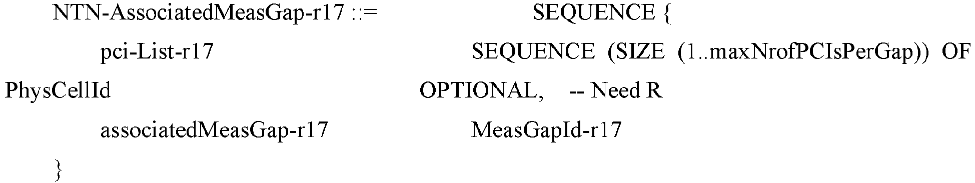

As shown in the above code, NTN-AssociatedMeasGap-r17 is the indication information, associatedMeasGap-r17 in NTN-AssociatedMeasGap-r17 is used to indicate the measurement gap associated with the to-be-measured object, and pci-List-r17 in NTN-AssociatedMeasGap-r17 is used to indicate the to-be-measured cell list associated with the measurement gap. In the above code, OPTIONAL refers to that a parameter is optional, and Need R refers to a corresponding Need Code.

It should be appreciated that, names of fields and IEs in the above code are not particularly defined, and any fields and IEs having similar functions shall also fall within the scope of the present invention.

It should be appreciated that, the above code is merely for illustrative purposes, and the fields included therein are optional. Mandatory or conditional fields will not be particularly defined herein, and corresponding Need Code will not be particularly defined either, which also fall within the scope of the present invention.

Detailed description about Step 701a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 7b is a flow chart of an indication information configuration method according to an embodiment of the present invention, and this method is executed by a network device. As shown in FIG. 7b, the indication information configuration method includes the following step.

Step 701b: first configuration information is sent to a terminal device. The first configuration information includes a configuration of a to-be-measured object, and the first configuration information is configured with one or more of first gap indication information or second gap indication information associated with one or more to-be-measured objects. The first gap indication information and the second gap indication information are both used to indicate one or more measurement gaps associated with the to-be-measured object and applied to a NTN. The first gap indication information and the second gap indication information are further used to indicate one or more of a to-be-measured cell, a to-be-measured cell group, a to-be-measured cell list, a to-be-measured cell group list, a SMTC, a SMTC list, a satellite, or a satellite list associated with the one or more measurement gaps indicated by the first gap indication information and the second gap indication information.

Detailed description about Step 701a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 7c is a flow chart of an indication information configuration method according to an embodiment of the present invention, and this method is executed by a network device. As shown in FIG. 7c, the indication information configuration method includes the following step.

Step 701c: first configuration information is sent to a terminal device, and the first configuration information includes a configuration of a to-be-measured object. The first configuration information is configured with a gap indication list associated with one or more to-be-measured objects. The gap indication list includes n pieces of third gap indication, and the n pieces of third gap indication information are used to indicate different measurement gaps applied to a NTN. The third gap indication further indicates one or more of a to-be-measured cell, a to-be-measured cell group, a to-be-measured cell list, a to-be-measured cell group list, a SMTC, a SMTC list, a satellite, or a satellite list associated with the one or more measurement gaps indicated by the third gap indication information.

Detailed description about Step 701a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

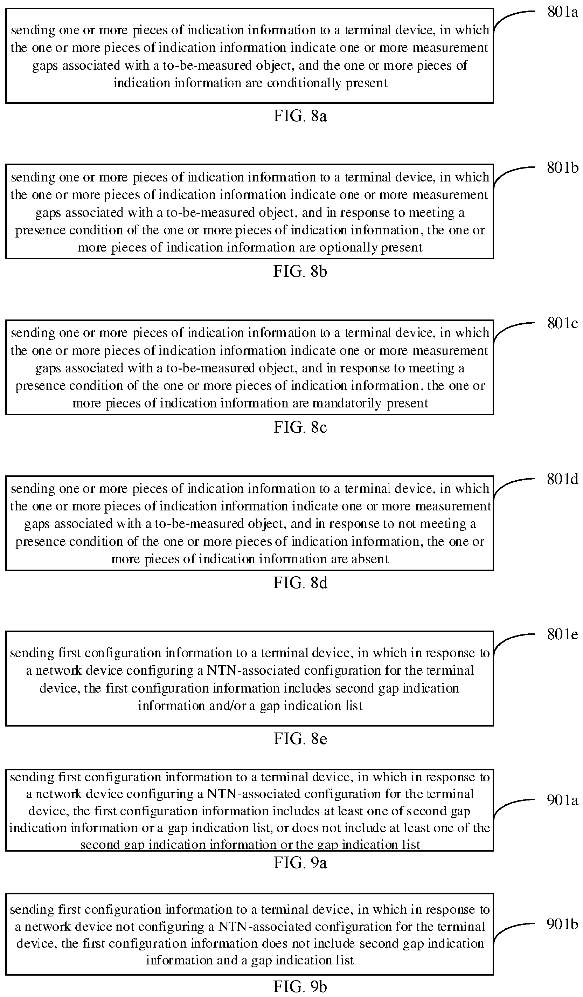

FIG. 8a is a flow chart of an indication information configuration method according to an embodiment of the present invention, and this method is executed by a network device. As shown in FIG. 8a, the indication information configuration method includes the following step.

Step 801a: one or more pieces of indication information are sent to a terminal device. The one or more pieces of indication information indicate one or more measurement gaps associated with a to-be-measured object. The indication information is conditionally present.

In an embodiment of the present invention, in a case that the indication information is conditionally present, the indication information is optionally or mandatorily present in response to meeting a presence condition of the indication information; and the indication information is absent in response to not meeting the presence condition of the indication information.

The presence condition of the indication information includes: that the network device configures a NTN-associated configuration for the terminal device; and/or that the to-be-measured object is used for a measurement of a NTN cell.

The NTN-associated configuration includes a SMTC configuration list (i.e., smtc4list), and the smtc4list is configured in configuration information about a measurement object.

In an embodiment of the present invention, with respect to such a circumstance where "the indication information is optionally present", in a case that the indication information is present, a corresponding Need Code is configured for the second gap indication information and/or the gap indication list. The Need Code is one of Need R, Need M, Need N or Need S, e.g., the above illustrative code includes Need R. It should be appreciated that, relevant description about Need R, Need M, Need N and Need S may refer to that known in the related art.

Other detailed description about Step 801a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 8b is a flow chart of an indication information configuration method according to an embodiment of the present invention, and this method is executed by a network device. As shown in FIG. 8b, the indication information configuration method includes the following step.

Step 801b: one or more pieces of indication information are sent to a terminal device. The one or more pieces of indication information indicate one or more measurement gaps associated with a to-be-measured object. The indication information is optionally present in response to meeting a presence condition of the indication information.

In an embodiment of the present invention, with respect to such a circumstance where "the indication information is optionally present", in a case that the indication information is present, a corresponding Need Code is configured for the second gap indication information and/or the gap indication list. The Need Code is one of Need R, Need M, Need N or Need S, e.g., the above illustrative code includes Need R. It should be appreciated that, relevant description about Need R, Need M, Need N and Need S may refer to that known in the related art.

Other detailed description about Step 801b may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 8c is a flow chart of an indication information configuration method according to an embodiment of the present invention, and this method is executed by a network device. As shown in FIG. 8c, the indication information configuration method includes the following step.

Step 801c: one or more pieces of indication information are sent to a terminal device. The one or more pieces of indication information indicate one or more measurement gaps associated with a to-be-measured object. The indication information is mandatorily present in response to meeting a presence condition of the indication information.

Other detailed description about Step 801c may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 8d is a flow chart of an indication information configuration method according to an embodiment of the present invention, and this method is executed by a network device. As shown in FIG. 8d, the indication information configuration method includes the following step.

Step 801d: one or more pieces of indication information are sent to a terminal device. The one or more pieces of indication information indicate one or more measurement gaps associated with a to-be-measured object. The indication information is absent in response to not meeting a presence condition of the indication information.

Other detailed description about Step 801d may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 8e is a flow chart of an indication information configuration method according to an embodiment of the present invention, and this method is executed by a network device. As shown in FIG. 8e, the indication information configuration method includes the following step.

Step 801e: first configuration information is sent to a terminal device. The first configuration information includes second gap indication information and/or a gap indication list in response to the network device configuring a NTN-associated configuration for the terminal device.

In other words, in an embodiment of the present invention, in a case that the network device configures the NTN-associated configuration for the terminal device, the first configuration information is mandatorily configured with the second gap indication information and/or the gap indication list. In an embodiment of the present invention, the NTN-associated configuration includes a SMTC configuration list (i.e., smtc4list), and the smtc4list is configured in configuration information about a to-be-measured object.

Other detailed description about the first configuration information, the second gap indication information and the gap indication list in Step 801 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 9a is a flow chart of an indication information configuration method according to an embodiment of the present invention, and this method is executed by a network device. As shown in FIG. 9a, the indication information configuration method includes the following step.

Step 901a: first configuration information is sent to a terminal device. In response to the network device configuring a NTN-associated configuration for the terminal device, the first configuration information includes at least one of second gap indication information or a gap indication list, or does not include at least one of the second gap indication information or the gap indication list.

In other words, in an embodiment of the present invention, in a case that the network device configures the NTN-associated configuration for the terminal device, the first configuration information is optionally configured with the second gap indication information and/or the gap indication list. In an embodiment of the present invention, the NTN-associated configuration is a SMTC configuration list (i.e., smtc4list).

In an embodiment of the present invention, with respect to such a circumstance where "the first configuration information is optionally configured with the second gap indication information and/or the gap indication list", in a case that the first configuration information is configured with the second gap indication information and/or the gap indication list, a corresponding Need Code is configured for the second gap indication information and/or the gap indication list. The Need Code is one of Need R, Need M, Need N or Need S, e.g., the above illustrative code includes Need R. It should be appreciated that, relevant description about Need R, Need M, Need N and Need S may refer to that known in the related art.

In addition, it should be appreciated that, in an embodiment of the present invention, in a case that the first configuration information does not include the second gap indication information or the gap indication list, the UE performs NTN measurement based on a measurement gap indicated by first gap indication information.

In addition, other detailed description about the first configuration information, the second gap indication and the gap indication information in Step 901a may refer to that mentioned in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 9b is a flow chart of an indication information configuration method according to an embodiment of the present invention, and this method is executed by a network device. As shown in FIG. 9b, the indication information configuration method includes the following step.

Step 901b: first configuration information is sent to a terminal device. In response to the network device not configuring a NTN-associated configuration for the terminal device, the first configuration information does not include second gap indication information and a gap indication list.

In other words, in an embodiment of the present invention, in a case that the network device does not configure the NTN-associated configuration for the terminal device, it means that the first configuration information is used for TN measurement rather than NTN measurement. For the TN measurement, one measurement gap configured for the terminal device is adapted to the measurement of signals in different to-be-measured cells in the TN measurement, so the first configuration information does not include the second gap indication information and the gap indication list but merely includes first gap indication information, and the first gap indication information is used to configure one measurement gap associated with a to-be-measured object in a TN system for the terminal device.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

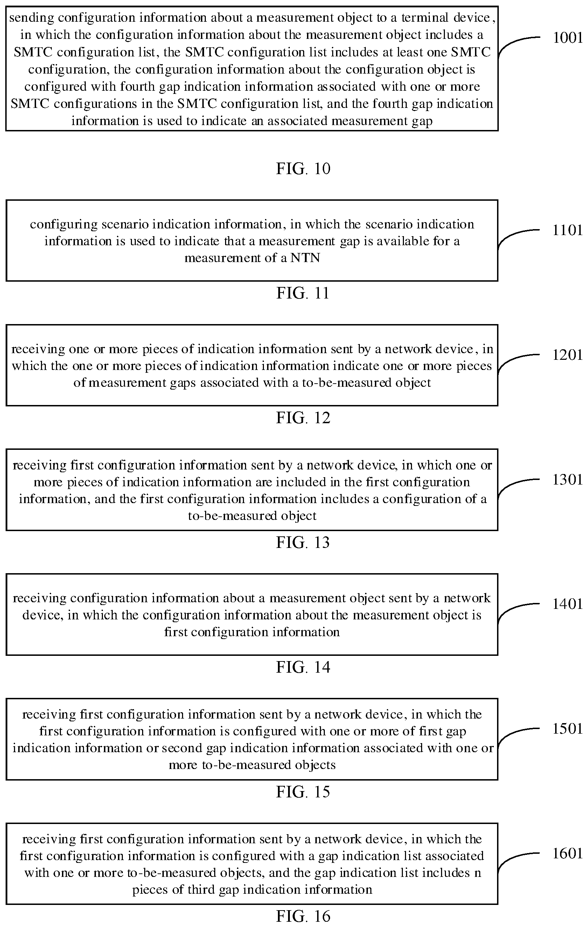

FIG. 10 is a flow chart of an indication information configuration method according to an embodiment of the present invention, and this method is executed by a network device. As shown in FIG. 10, the indication information configuration method includes the following step.

Step 1001: configuration information about a measurement object is sent to a terminal device. The configuration information about the measurement object includes a SMTC configuration list, and the SMTC configuration list includes at least one SMTC configuration. The configuration information about the measurement object is configured with fourth gap indication information associated with one or more SMTC configurations in the SMTC configuration list, and the fourth gap indication information is used to indicate an associated measurement gap.

In an embodiment of the present invention, the fourth gap indication information includes a measurement identity of the measurement gap.

In an embodiment of the present invention, in response to the configuration information about the measurement object including the SMTC configuration list, in a case that the SMTC configuration list is a measurement timing configuration table for a NTN and one piece of fourth gap indication is associated with one or more SMTC configurations in the SMTC configuration list (i.e., one or more pieces of fourth gap indication information are associated with one SMTC configuration list), the SMTC configuration list used for a measurement of a to-be-measured object SSB, so it is equivalent to that the to-be-measured object SSB in the NTN system is associated with the one or more pieces of fourth gap indication information. At this time, the one or more pieces of fourth gap indication information are used to indicate one or more measurement gaps associated with the to-be-measured object SSB.

Based on the above, in a case that the to-be-measured object SSB corresponding to a certain SMTC configuration needs to be measured, the measurement is performed based one or more associated measurement gaps. For example, the SSB measurement is performed using the corresponding SMTC and the associated measurement gap.

Further, in an embodiment of the present invention, each SMTC configuration in the SMTC configuration list is associated with one piece of fourth gap indication information, or a part of SMTC configurations in the SMTC configuration list are each associated with one piece of fourth gap indication information, or one SMTC configuration in the SMTC configuration list is associated with the fourth gap indication information.

For example, in an embodiment of the present invention, the fourth gap indication information associated with the SMTC configuration in the SMTC configuration list is configured using a following fourth code snippet.

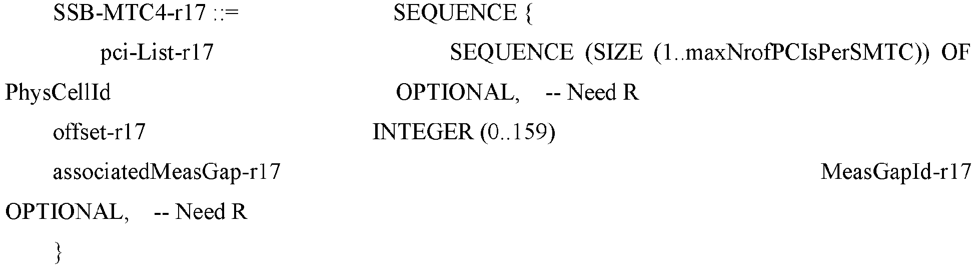

SSB-MTC4-r17 is a SMTC configuration in the SMTC configuration list, and associatedMeasGap-r17 in SSB-MTC4-r17 is the fourth gap indication information associated with the SMTC configuration. In the above code, OPTIONAL refers to that a parameter is optional, and Need R refers to a corresponding Need Code.

It should be appreciated that, names of fields and IEs in the above code are not particularly defined, and any fields and IEs having similar functions shall also fall within the scope of the present invention.

It should be appreciated that, the above code is merely for illustrative purposes, and the fields included therein are optional. Mandatory or conditional fields will not be particularly defined herein, and corresponding Need Code will not be particularly defined either, which also fall within the scope of the present invention.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 11 is a flow chart of an indication information configuration method according to an embodiment of the present invention, and this method is executed by a network device. As shown in FIG. 11, the indication information configuration method includes the following step.

Step 1101: scenario indication information is configured, and the scenario indication information is used to indicate that one or more measurement gaps are available for a measurement of a NTN.

In an embodiment of the present invention, specifically the scenario indication information is configured in configuration information about the measurement gap, so as to indicate that the configuration information about the measurement gap is available for the measurement of the NTN.

In an embodiment of the present invention, through configuring the scenario indication information, after the terminal device has determined the corresponding configuration information about the measurement gap based on a measurement identity indicated by the above indication information (e.g., first gap indication information, second gap indication information, third gap indication information or fourth gap indication information), in a case that the configuration information about the measurement gap includes the scenario indication information, it means that the configuration information about the measurement gap is used for the measurement of the NTN.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

The following is an illustrative introduction about optional implementation modes of the method in Figs. 1 to 11 from the perspective of the network device, and any of the implementation modes may be executed separately or executed in combination with the other implementation modes.
1. A network configures indication information for a NTN for a UE, so as to indicate a measurement gap associated with a to-be-measured frequency layer. The measurement gap is represented by a measurement gap identity.
   1.1. Additional indication information (second indication information is added in a configuration of a measurement object (MeasObjectNR), so as to indicate an additional measurement gap for the NTN. The UE determines the additional measurement gap corresponding to the measurement object based on the additional indication information. The measurement gap and indication information (first indication information) introduced in a concurrent gap are used to determine a measurement gap corresponding to the measurement object for measuring a NTN cell.
   1.2. An indication information list is added in the configuration of the measurement object, and this list indicates a corresponding measurement gap list for the measurement of the NTN cell. The list has a size of 1 to n (n=2, which indicates a maximum quantity of gaps supported to be configured simultaneously in the NTN), and each entry in the list corresponds to one measurement gap represented by a measurement identity.
   1.3. Different reference signals (SSB or CSI-RS) correspond to different indication information.
   1.4. In a case that a plurality of measurement objects having the same SSB frequency is configured, the same measurement gap is configured in the indication information for each measurement object having the same SSB frequency.
2. A cell or a cell group, a SMTC, or a satellite or a satellite list corresponding to the measurement gap is indicated.
   2.1. The above indication information or the indication information corresponding to each entry in the indication information list further includes a cell or cell list, a SMTC or SMTC list, or a satellite or satellite list associated with the measurement gap, so as to indicate the cell or cell group measured based on the measurement gap, or the corresponding SMTC, or the corresponding satellite or satellite list.
   2.2. Each entry in a SMTC configuration list (smtc4list) for NTN deployment includes a measurement gap corresponding to the SMTC, and this measurement gap is represented by a gap identity.
3. The indication information in the above section 1 is determined to be only used for a NTN deployment scenario.
   3.1. The additional indication information or indication information list in the above section 1 is present only in the NTN deployment, otherwise it is absent.
   3.1.1. The indication information in the above section 1 is conditionally present, and a presence condition is a NTN-associated deployment or configuration, e.g., a smtc4list is configured. In a case that the smtc4list is configured, a corresponding field in the indication information is optional, i.e., Need R. Otherwise, the indication information is absent.
   3.2. In a case that the additional indication information (the second indication information) or indication information list in the above section 1 is absent, the UE determines a measurement gap for the frequency in the NTN deployment based on the first indication information.
   3.3. The indication information in the above section 1 is mandatory or optional (the corresponding Need Code is one of Need R, Need M, Need N or Need S).
   3.4. For the above section 1.1, in a case that the first indication information is absent, the second indication information is absent or a configuration of the second indication information is omitted by the UE.
   3.5. For the above section 1.2, in a case that the indication information list is configured, the first indication information is absent or the first indication information is omitted. In other words, the first indication information is configured only in a case that the indication information list is not configured.
4. Indication information is added in the configuration of the measurement gap, so as to indicate that the measurement gap is used for the measurement of the NTN.
5. Two per UE gaps, or a FR1GAP and a FR2Gap, are supported to be configured simultaneously in the NTN, but the per UE gap and the per FR gap are not supported to be configured simultaneously.

### Examples

Example 1: corresponding to 1.1

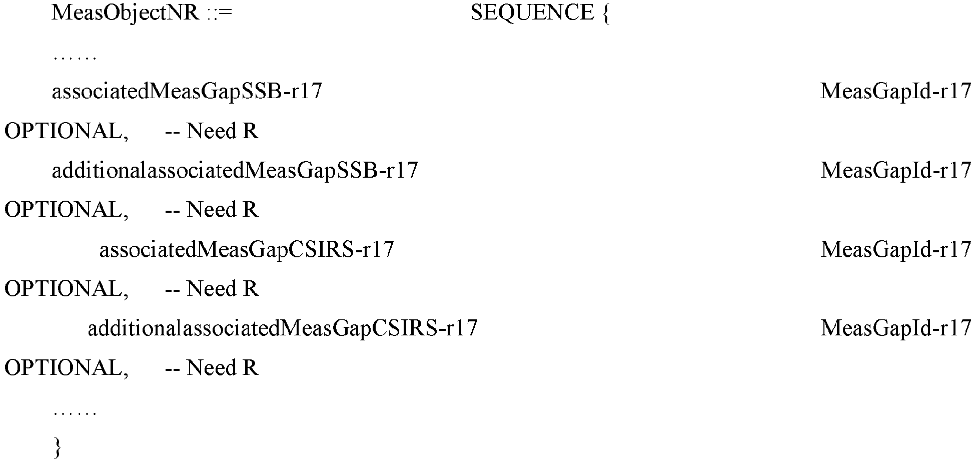

In the above, associatedMeasGapSSB-r17 represents the first indication information, and additionalassociatedMeasGapSSB-r17 represents the second indication information.

Example 2: corresponding to 1.2

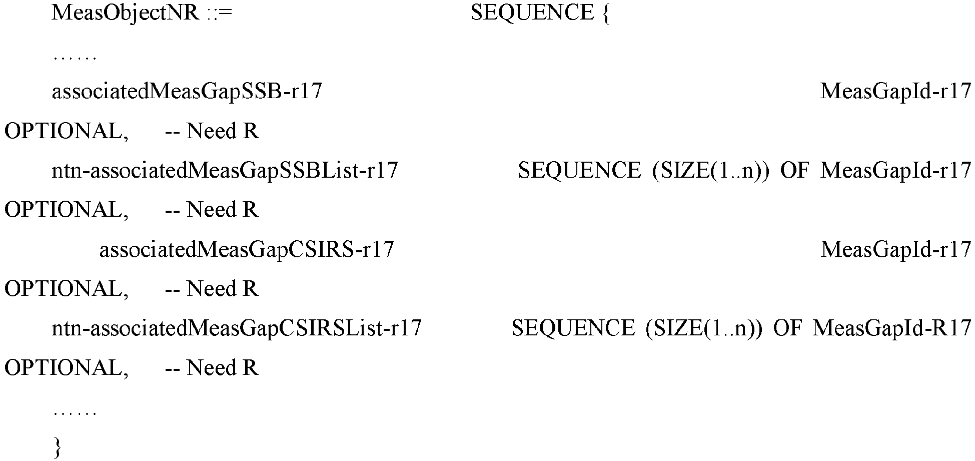

In the above, associatedMeasGapSSB-r17 represents the first indication information, and ntn-associatedMeasGapSSBList represents the indication information list.

Example 3: corresponding to 2.1. MeasGapId in Examples 1 and 2 is replaced with NTN-AssociatedMeasGap, and this parameter includes MeasGapId and an associated cell or cell list, SMTC or SMTC list, or satellite or satellite list. Taking Celllist as an example, it is configured as follows.

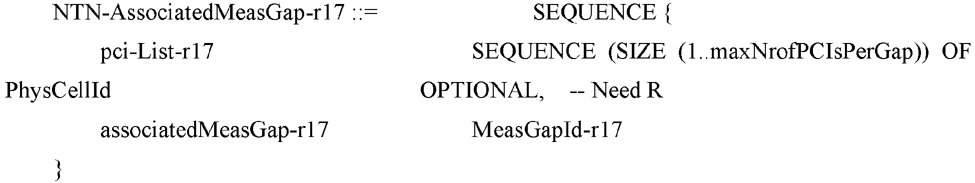

Example 4: corresponding to 2.2

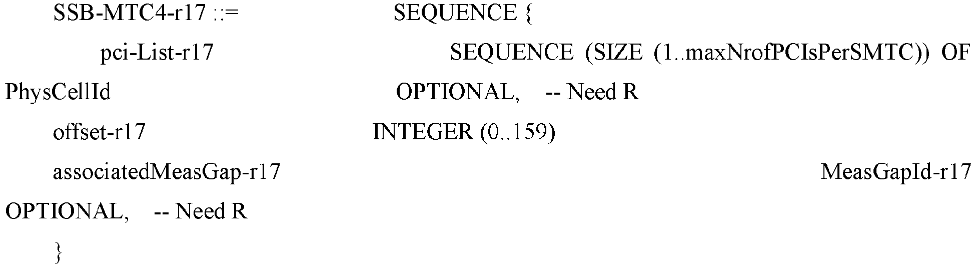

Example 5: corresponding to 3.1. Need R marked as yellow in Examples 1 and 2 is modified into Conditional Presence, e.g., Cond SMTC4list (or SMTC4) Conditional Presence : SMTC4list.

Explanation: this field is optionally present, Need R, if smtc4list is configured. It is absent otherwise.

FIG. 12 is a flow chart of an indication information configuration method according to an embodiment of the present invention, and this method is executed by a terminal device. As shown in FIG. 12, the indication information configuration method includes the following step.

Step 1201: one or more pieces of indication information sent by a network device are received, and the one or more pieces of indication information indicate one or more measurement gaps associated with a to-be-measured object.

Detailed description about Step 1201 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 13 is a flow chart of an indication information configuration method according to an embodiment of the present invention, and this method is executed by a terminal device. As shown in FIG. 13, the indication information configuration method includes the following step.

Step 1301: first configuration information sent by a network device is received, one or more pieces of indication information are included in the first configuration information, and the first configuration information includes a configuration of a to-be-measured object.

Detailed description about Step 1301 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 14 is a flow chart of an indication information configuration method according to an embodiment of the present invention, and this method is executed by a terminal device. As shown in FIG. 14, the indication information configuration method includes the following step.

Step 1401: configuration information about a measurement object sent by a network device is received, and the configuration information about the measurement object is first configuration information.

Detailed description about Step 1401 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 15 is a flow chart of an indication information configuration method according to an embodiment of the present invention, and this method is executed by a terminal device. As shown in FIG. 15, the indication information configuration method includes the following step.

Step 1501: first configuration information sent by a network device is received, and the first configuration information is configured with one or more of first gap indication information or second gap indication information associated with one or more to-be-measured objects.

Detailed description about Step 1501 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 16 is a flow chart of an indication information configuration method according to an embodiment of the present invention, and this method is executed by a terminal device. As shown in FIG. 16, the indication information configuration method includes the following step.

Step 1601: first configuration information sent by a network device is received, the first configuration information is configured with a gap indication list associated with one or more to-be-measured objects, and the gap indication list includes n pieces of third gap indication information.

Detailed description about Step 1601 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

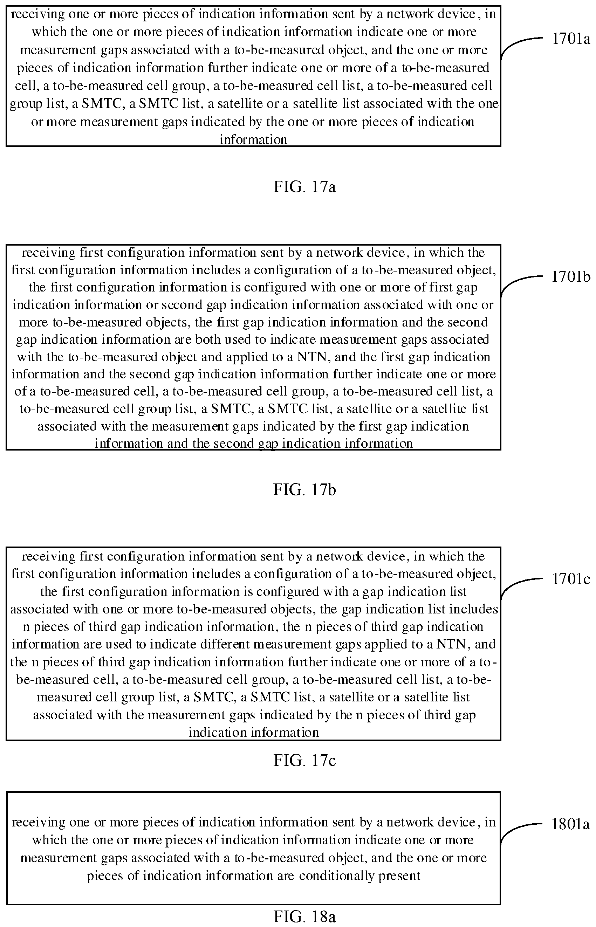

FIG. 17a is a flow chart of an indication information configuration method according to an embodiment of the present invention, and this method is executed by a terminal device. As shown in FIG. 17a, the indication information configuration method includes the following step.

Step 1701a: one or more pieces of indication information sent by a network device are received, the one or more pieces of indication information indicate one or more measurement gaps associated with the to-be-measured object, and the one or more pieces of indication information further indicate one or more of a to-be-measured cell, a to-be-measured cell group, a to-be-measured cell list, a to-be-measured cell group list, a SMTC, a SMTC list, a satellite or a satellite list associated with the one or more measurement gaps indicated by the one or more pieces of indication information.

Detailed description about Step 1701a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 17b is a flow chart of an indication information configuration method according to an embodiment of the present invention, and this method is executed by a terminal device. As shown in FIG. 17b, the indication information configuration method includes the following step.

Step 1701b: first configuration information sent by a network device is received, the first configuration information includes a configuration to a to-b-measurement object, the first configuration information is configured with one or more of first gap indication information and second gap indication information associated with one or more to-be-measured objects, the first gap indication information and the second gap indication information are both used to indicate the measurement gap associated with the one or more to-be-measured objects and applied to a NTN, and the first gap indication information and the second gap indication information further indicate one or more of a to-be-measured cell, a to-be-measured cell group, a to-be-measured cell list, a to-be-measured cell group list, a SMTC, a SMTC list, a satellite or a satellite list associated with the one or more measurement gaps indicated by the first gap indication information and the second gap indication information.

Detailed description about Step 1701b may refer to that mentioned in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 17c is a flow chart of an indication information configuration method according to an embodiment of the present invention, and this method is executed by a terminal device. As shown in FIG. 17c, the indication information configuration method includes the following step.

Step 1701c: first configuration information sent by a network device is received, the first configuration information includes a configuration of a to-be-measured object, the first configuration information is configured with a gap indication list associated with one or more to-be-measured objects, the gap indication list includes n pieces of third gap indication information, the n third gap indication information are used to indicate different measurement gaps for a NTN, and the n pieces of third gap indication information further indicate one or more of a to-be-measured cell, a to-be-measured cell group, a to-be-measured cell list, a to-be-measured cell group list, a SMTC, a SMTC list, a satellite or a satellite list associated with the one or more measurement gaps indicated by the n pieces of third gap indication information.

Detailed description about Step 1701c may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 18a is a flow chart of an indication information configuration method according to an embodiment of the present invention, and this method is executed by a terminal device. As shown in FIG. 18a, the indication information configuration method includes the following step.

Step 1801a: one or more pieces of indication information sent by a network device are received, and the one or more pieces of indication information indicate one or more measurement gaps associated with a to-be-measured object. The indication information is conditionally present.

Other detailed description about Step 1801a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

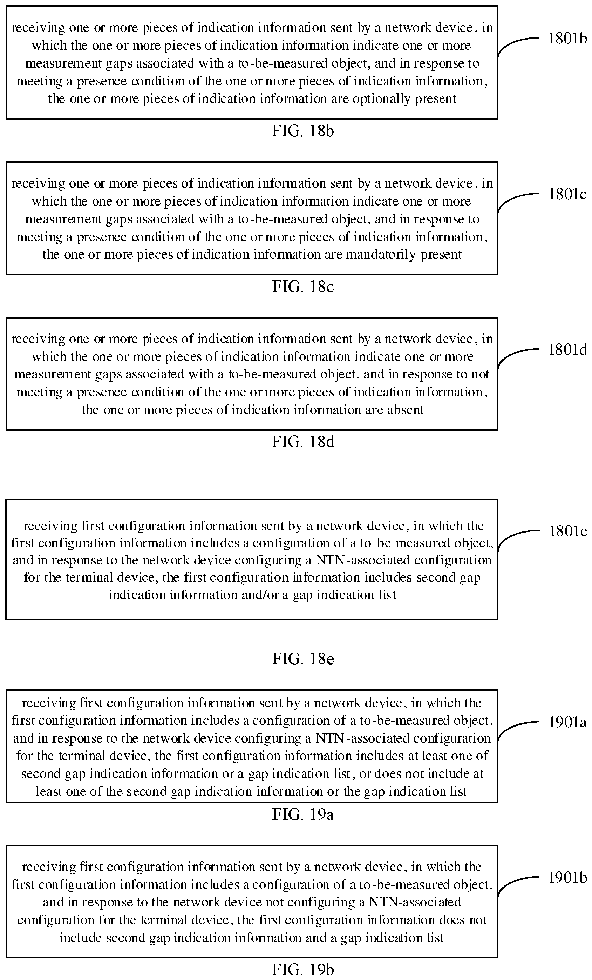

FIG. 18b is a flow chart of an indication information configuration method according to an embodiment of the present invention, and this method is executed by a terminal device. For example, as shown in FIG. 18b, the indication information configuration method includes the following step.

Step 1801b: one or more pieces of indication information sent by a network device are received, and the one or more pieces of indication information indicate one or more measurement gaps associated with a to-be-measured object. In response to meeting a presence condition of the indication information, the indication information is optionally present.

Other detailed description about Step 1801b may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 18c is a flow chart of an indication information configuration method according to an embodiment of the present invention, and this method is executed by a terminal device. As shown in FIG. 18c, the indication information configuration method includes the following step.

Step 1801c: one or more pieces of indication information sent by a network device are received, and the one or more pieces of indication information indicate one or more pieces of measurement gaps associated with a to-be-measured object. In response to meeting a presence condition of the indication information, the indication information is mandatorily present.

Other detailed description about Step 1801c may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 18d is a flow chart of an indication information configuration method according to an embodiment of the present invention, and this method is executed by a terminal device. As shown in FIG. 18d, the indication information configuration method includes the following step.

Step 1801d: one or more pieces of indication information sent by a network device are received, and the one or more pieces of indication information indicate one or more measurement gaps associated with a to-be-measured object. In response to not meeting a presence condition of the indication information, the indication information is absent.

Other detailed description about Step 1801d may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 18e is a flow chart of an indication information configuration method according to an embodiment of the present invention, and this method is executed by a terminal device. For example, as shown in FIG. 18e, the indication information configuration method includes the following step.

Step 1801e: first configuration information sent by a network device is received, and the first configuration information includes a configuration of a to-be-measured object. In response to the network device configuring a NTN-associated configuration for the terminal device, the first configuration information includes second gap indication information and/or a gap indication list.

Detailed description about Step 1801e may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 19a is a flow chart of an indication information configuration method according to an embodiment of the present invention, and this method is executed by a terminal device. As shown in FIG. 19a, the indication information configuration method includes the following step.

Step 1901a: first configuration information sent by a network device is received, and the first configuration information includes a configuration of a to-be-measured object. In response to the network device configuring a NTN-associated configuration for the terminal device, the first configuration information includes at least one of second gap indication information or a gap indication list, or does not include at least one of the second gap indication information or the gap indication list.

Detailed description about Step 1901a may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 19b is a flow chart of an indication information configuration method according to an embodiment of the present invention, and this method is executed by a terminal device. As shown in FIG. 19b, the indication information configuration method includes the following step.

Step 1901b: first configuration information sent by a network device is received, and the first configuration information includes a configuration of a to-be-measured object. In response to the network device not configuring a NTN-associated configuration, the first configuration information does not include second gap indication information and a gap indication list.

Detailed description about Step 1901b may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

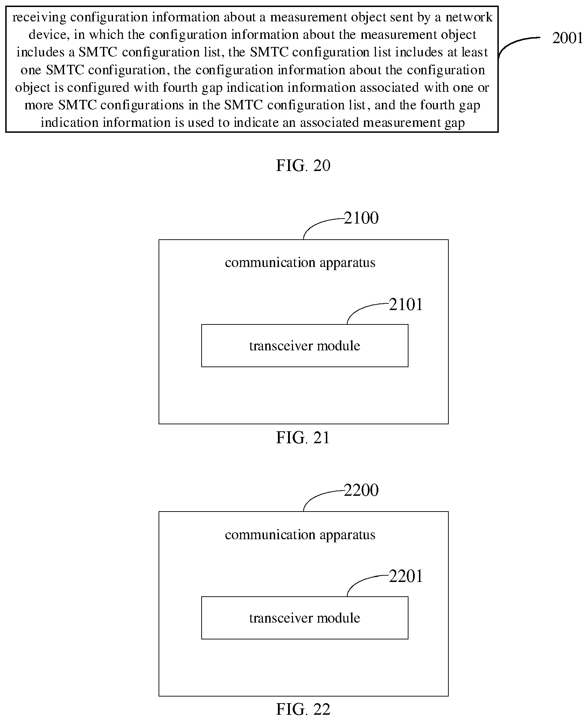

FIG. 20 is a flow chart of an indication information configuration method according to an embodiment of the present invention, and this method is executed by a terminal device. As shown in FIG. 20, the indication information configuration method includes the following step.

Step 2001: configuration information about a measurement object sent by a network device is received, the configuration information about the measurement object includes a SMTC configuration list, the SMTC configuration list includes at least one SMTC configuration, the configuration information about the measurement object is configured with fourth gap indication information associated with one or more SMTC configurations in the SMTC configuration list, and the fourth gap indication information is used to indicate an associated measurement gap.

Detailed description about Step 2001 may refer to that in the above embodiments.

In a word, according to the indication information configuration method provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

FIG. 21 is a schematic view showing a communication apparatus according to an embodiment of the present invention. As shown in FIG. 21, the communication apparatus includes a transceiver module.

The transceiver module is configured to send one or more pieces of indication information to a terminal device, and the one or more pieces of indication information indicate one or more measurement gaps associated with a to-be-measured object.

In a word, according to the communication apparatus provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

Optionally, in an embodiment of the present invention, the transceiver module is configured to send first configuration information to the terminal device, the one or more pieces of indication information are included in the first configuration information, and the first configuration information includes a configuration of one or more to-be-measured objects.

Optionally, in an embodiment of the present invention, the transceiver module is configured to send configuration information about a measurement object to the terminal device, and the configuration information about the measurement object is the first configuration information.

Optionally, in an embodiment of the present invention, the one or more to-be-measured objects include a measurement object, or different reference signals in a measurement object.

Optionally, in an embodiment of the present invention, the first configuration information is configured with one or more of first gap indication information or second gap indication information associated with the one or more to-be-measured objects respectively.

Optionally, in an embodiment of the present invention, the first gap indication information and the second gap indication information are both used to indicate the measurement gap associated with the one or more to-be-measured objects and applied to a NTN.

Optionally, in an embodiment of the present invention, the first configuration information is configured with a gap indication list associated with the one or more to-be-measured objects, and the gap indication list includes n pieces of third gap indication information.

Optionally, in an embodiment of the present invention, the n pieces of third gap indication information are used to indicate different measurement gaps applied to a NTN.

Optionally, in an embodiment of the present invention, the one or more pieces of indication information further indicates, in addition to the one or more measurement gaps associated with the to-be-measured object, one or more of a to-be-measured cell, a to-be-measured cell group, a to-be-measured cell list, a to-be-measured cell group list, a SMTC, a SMTC list, a satellite, or a satellite list associated with the one or more measurement gaps indicated by the one or more pieces of indication information.

Optionally, in an embodiment of the present invention, each of the reference signals includes at least one of: a SSB; or a CSI-RS.

Optionally, in an embodiment of the present invention, the configuration information about the measurement object includes a SMTC configuration list, and the SMTC configuration list includes at least one SMTC configuration; the configuration information about the measurement object is configured with fourth gap indication information associated with one or more SMTC configurations in the SMTC configuration list; and the fourth gap indication information is used to indicate an associated measurement gap.

Optionally, in an embodiment of the present invention, the one or more pieces of indication information are conditionally present. In response to meeting a presence condition of the one or more pieces of indication information, the one or more pieces of indication information are optionally or mandatorily present; and in response to not meeting the presence condition of the one or more pieces of indication information, the one or more pieces of indication information are absent.

Optionally, in an embodiment of the present invention, the presence condition of the one or more pieces of indication information includes: that the network device configures a NTN-associated configuration for the terminal device; and/or that the to-be-measured object is used for a measurement of a NTN cell.

Optionally, in an embodiment of the present invention, in response to the network device configuring the NTN-associated configuration for the terminal device, the first configuration information includes at least one of the second gap indication information, the gap indication list or the fourth gap indication information; or in response to the network device configuring the NTN-associated configuration for the terminal device, the first configuration information includes at least one of the second gap indication information, the gap indication list or the fourth gap indication information, or does not include at least one of the second gap indication information, the gap indication list or the fourth gap indication information; or in response to the network device not configuring the NTN-associated configuration for the terminal device, the first configuration information does not include at least one of the second gap indication information, the gap indication list or the fourth gap indication information.

Optionally, in an embodiment of the present invention, the communication apparatus is further configured to configure scenario indication information, and the scenario indication information is used to indicate that the one or more measurement gaps are available for a measurement of the NTN.

FIG. 22 is a schematic view showing a communication apparatus according to an embodiment of the present invention. As shown in FIG. 22, the communication apparatus includes a transceiver module.

The transceiver module is configured to receive one or more pieces of indication information sent by a network device, and the one or more pieces of indication information indicate one or more measurement gaps associated with a to-be-measured object.

In a word, according to the communication apparatus provided in the embodiments of the present invention, the network device sends the one or more pieces of indication information to the terminal device, and the one or more pieces of indication information indicate the one or more measurement gaps associated with the to-be-measured object. Based on this, in the embodiments of the present invention, the network device sends the one or more pieces of indication information to the terminal device, so as to configure the one or more measurement gaps associated with the to-be-measured object for the terminal device. In other words, the present invention provides a method for configuring a plurality of measurement gaps associated with the to-be-measured object for the terminal device, so as to be adapted to the measurement of different to-be-measured cells in a NTN system, prevent the occurrence of such a circumstance where "only one measurement gap associated with the to-be-measured object is configured for the terminal device, so it cannot be adapted to different to-be-measured cells from different satellites in the NTN system and thereby reference signals in some certain to-be-measured satellite cells cannot be measured", and ensure the measurement stability of the to-be-measured object in the NTN system.

Optionally, in an embodiment of the present invention, the transceiver module is further configured to receive first configuration information sent by the network device, the one or more pieces of indication information are included in first configuration information, and the first configuration information includes a configuration of one or more to-be-measured objects.

Optionally, in an embodiment of the present invention, the transceiver module is further configured to receive configuration information about a measurement object sent by the network device, and the configuration information about the measurement object is first configuration information.

Optionally, in an embodiment of the present invention, the one or more to-be-measured objects include a measurement object, or different reference signals in a measurement object.

Optionally, in an embodiment of the present invention, the first configuration information is configured with one or more of first gap indication information or second gap indication information associated with the one or more to-be-measured objects respectively.

Optionally, in an embodiment of the present invention, the first gap indication information and the second gap indication information are both used to indicate a measurement gap associated with the one or more to-be-measured objects and applied to a NTN.

Optionally, in an embodiment of the present invention, the first configuration information is configured with a gap indication list associated with the one or more to-be-measured objects, and the gap indication list includes n pieces of third gap indication information.

Optionally, in an embodiment of the present invention, the n pieces of third gap indication information are used to indicate different measurement gaps applied to a NTN.

Optionally, in an embodiment of the present invention, the one or more pieces of indication information further indicates, in addition to the one or more measurement gaps associated with the to-be-measured object, one or more of a to-be-measured cell, a to-be-measured cell group, a to-be-measured cell list, a to-be-measured cell group list, a SMTC, a SMTC list, a satellite, or a satellite list associated with the one or more measurement gaps indicated by the one or more pieces of indication information.

Optionally, in an embodiment of the present invention, each of the reference signals includes at least one of: a SSB; or a CSI-RS.

Optionally, in an embodiment of the present invention, the configuration information about the measurement object includes a SMTC configuration list, and the SMTC configuration list includes at least one SMTC configuration; the configuration information about the measurement object is configured with fourth gap indication information associated with one or more SMTC configurations in the SMTC configuration list; and the fourth gap indication information is used to indicate an associated measurement gap.

Optionally, in an embodiment of the present invention, the one or more pieces of indication information are conditionally present. In response to meeting a presence condition of the one or more pieces of indication information, the one or more pieces of indication information are optionally or mandatorily present; and in response to not meeting the presence condition of the one or more pieces of indication information, the one or more pieces of indication information are absent.

Optionally, in an embodiment of the present invention, the presence condition of the one or more pieces of indication information includes: that the network device configures a NTN-associated configuration for the terminal device; and/or that the to-be-measured object is used for a measurement of a NTN cell.

Optionally, in an embodiment of the present invention, in response to the network device configuring the NTN-associated configuration for the terminal device, the first configuration information includes at least one of the second gap indication information, the gap indication list or the fourth gap indication information; or in response to the network device configuring the NTN-associated configuration for the terminal device, the first configuration information includes at least one of the second gap indication information, the gap indication list or the fourth gap indication information, or does not include at least one of the second gap indication information, the gap indication list or the fourth gap indication information; or in response to the network device not configuring the NTN-associated configuration for the terminal device, the first configuration information does not include at least one of the second gap indication information, the gap indication list or the fourth gap indication information.

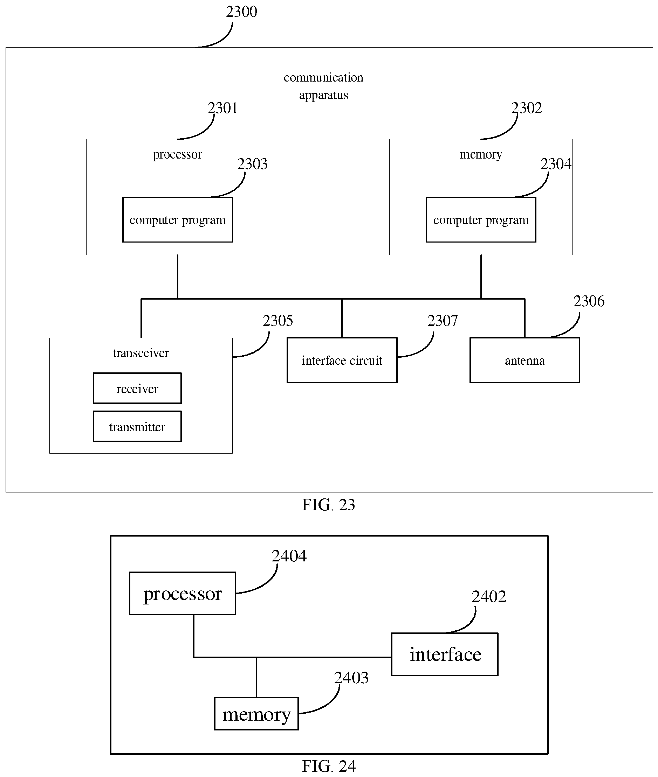

FIG. 23 is a schematic view showing a communication apparatus 2300 according to an embodiment of the present invention. The communication apparatus 2300 may be a network device, a terminal device, or a chip, a chip system or a processor which supports the network device to achieve the above-mentioned method, or a chip, a chip system or a processor which supports the terminal device to achieve the above-mentioned method. The apparatus is used to achieve the above-mentioned method, which will not be particularly defined herein.

The communication apparatus 2300 may include one or more processors 2301. The processor 2301 may be a general-purpose processor or special-purpose processor, e.g., a baseband processor or a Central Processing Unit. The baseband processor is configured to process a communication protocol as well as communication data, and the Central Processing Unit is configured to control the communication apparatus (e.g., a network side device, a baseband chip, a terminal device, a terminal device chip, a Distributed Unit (DU) or a Centralized Unit (CU)), execute a computer program, and process data in the computer program.

Optionally, the communication apparatus further includes one or more memories 2302 storing therein a computer program 2304. The computer program 2304 is executed by the processor 2301, so that the communication apparatus 2300 executes the above-mentioned method. Optionally, the memory 2302 further stores therein data. The communication apparatus 2300 is arranged independent of, or integrated with, the memory 2302.

Optionally, the communication apparatus 2300 further includes a transceiver 2305 and an antenna 2306. The transceiver 2305 is also called as a transceiver unit, a transceiver machine or a transceiver circuit, and it is configured to achieve a transmission function and a reception function. The transceiver 2305 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 2300 further includes one or more interface circuits 2307. The interface circuit 2307 is configured to receive a code instruction and transmit it to the processor 2301. The processor 2301 executes the code instruction, so that the communication apparatus 2300 implements the above-mentioned method.

In a case that the communication apparatus 2300 is a network device, the transceiver 2305 is configured to implement the method in FIGs. 2 to 11.

In a case that the communication apparatus 2300 is a terminal device, the transceiver 2305 is configured to implement the method in FIGs. 12 to 20.

In an embodiment of the present invention, the processor 2301 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit or transfer signals.

In an embodiment of the present invention, the processor 2301 stores therein a computer program 2303, and the computer program 2303 is executed by the processor 2301, so that the communication apparatus 2300 implements the method in the above embodiments. The computer program 2303 may be programmed in the processor 2301, and in this case, the processor 2301 may be implemented through hardware.

In an embodiment of the present invention, the communication apparatus 2300 includes a circuit for implementing the above-mentioned transmission, reception or communication function. The processor and the transceiver described in the embodiments of the present invention may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device, but the scope of the communication apparatus is not limited thereto. In addition, a structure of the communication apparatus may not be limited by FIG. 23. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, FIG. 24 is a schematic view showing the chip. As shown in FIG. 24, the chip includes a processor 2401 and an interface 2402. There may exist one or more processors 2401, and more than one interface 2402.

Optionally, the chip further includes a memory 2403 for storing therein necessary computer programs and data.

It should be appreciated that, various illustrative logical blocks and steps listed in the embodiments of the present invention may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present invention.

The present invention further provides in some embodiments a readable storage medium storing therein an instruction. The instruction is executed by a computer so as to achieve the functions in any of the above-mentioned method embodiments.

The present invention further provides in some embodiments a computer program product. The computer program product is executed by a computer so as to achieve the functions in any of the above-mentioned method embodiments.

In the above-mentioned embodiments of the present invention, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present invention are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present invention or indicating any sequence.

The expression "at least one" is used to indicate one or more, e.g., two, three, four or more, which will not be particularly defined herein. In the embodiments of the present invention, for technical features of the same kind, the words "first", "second", "third", "A", "B", "C" and "D" are used to differentiate these technical features, without indicating any sequence or sizes thereof.

The correspondence shown in each table in the present invention may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present invention, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

The term "predefined" in the embodiments of the present invention may be understood as "defined", "defined in advance", "stored", "pre-stored", "pre-negotiated", "preconfigured", "programmed" or "pre-programed".

It should be appreciated that, units and algorithm steps for instances described in the embodiments of the present invention may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present invention.

It should be further appreciated that, for convenience and clarification, operation procedures of the system, apparatus and units described hereinabove may refer to the corresponding procedures in the method embodiments, and thus will not be particularly defined herein.

The above embodiments are merely for illustrative purposes, but shall not be construed as limiting the scope of the present invention. Any person skilled in the art may make modifications and substitutions without departing from the spirit of the present invention, and these modifications and substitutions shall also fall within the scope of the present invention. Hence, the scope of the present invention shall be subject to the scope defined by the appended claims.

## Claims

1. An indication information configuration method, executed by a network device, comprising:
sending one or more pieces of indication information to a terminal device, wherein the one or more pieces of indication information indicate one or more measurement gaps associated with a to-be-measured object.

2. The method of claim 1, wherein sending the one or more pieces of indication information to the terminal device comprises:
sending first configuration information to the terminal device, wherein the one or more pieces of indication information are comprised in the first configuration information, and the first configuration information comprises a configuration of one or more to-be-measured objects.

3. The method of claim 2, wherein sending the first configuration information to the terminal device comprising:
sending configuration information about a measurement object to the terminal device, wherein the configuration information about the measurement object is the first configuration information.

4. The method of claim 2 or 3, wherein the one or more to-be-measured objects comprise a measurement object, or different reference signals in a measurement object.

5. The method of claim 2, wherein the first configuration information is configured with one or more of first gap indication information or second gap indication information associated with the one or more to-be-measured objects respectively.

6. The method of claim 5, wherein the first gap indication information and the second gap indication information are both used to indicate the measurement gap associated with the one or more to-be-measured objects and applied to a Non-Terrestrial Network (NTN).

7. The method of claim 2, wherein the first configuration information is configured with a gap indication list associated with the one or more to-be-measured objects, and the gap indication list comprises n pieces of third gap indication information.

8. The method of claim 7, wherein the n pieces of third gap indication information are used to indicate different measurement gaps applied to a NTN.

9. The method of claim 1, wherein the one or more pieces of indication information further indicates, in addition to the one or more measurement gaps associated with the to-be-measured object, one or more of a to-be-measured cell, a to-be-measured cell group, a to-be-measured cell list, a to-be-measured cell group list, a Synchronization Signal Block Measurement Timing Configuration (SMTC), a SMTC list, a satellite, or a satellite list associated with the one or more measurement gaps indicated by the one or more pieces of indication information.

10. The method of claim 4, wherein the reference signal comprises at least one of:
a Synchronization Signal Block (SSB); or
a Channel State Information Reference Signal (CSI-RS).

11. The method of claim 4, wherein the configuration information about the measurement object comprises a SMTC configuration list, and the SMTC configuration list comprises at least one SMTC configuration;
wherein the configuration information about the measurement object is configured with fourth gap indication information associated with one or more SMTC configurations in the SMTC configuration list; and the fourth gap indication information is used to indicate an associated measurement gap.

12. The method of claim 1, wherein the one or more pieces of indication information are conditionally present;
wherein in response to meeting a presence condition of the one or more pieces of indication information, the one or more pieces of indication information are optionally or mandatorily present; and
in response to not meeting the presence condition of the one or more pieces of indication information, the one or more pieces of indication information are absent.

13. The method of claim 12, wherein the presence condition of the one or more pieces of indication information comprises:
that the network device configures a NTN-associated configuration for the terminal device; and/or
that the to-be-measured object is used for a measurement of a NTN cell.

14. The method of any one of claims 5, 7, 11, 12 or 13, wherein in response to the network device configuring the NTN-associated configuration for the terminal device, the first configuration information comprises at least one of the second gap indication information, the gap indication list or the fourth gap indication information; or
in response to the network device configuring the NTN-associated configuration for the terminal device, the first configuration information comprises at least one of the second gap indication information, the gap indication list or the fourth gap indication information, or does not comprise at least one of the second gap indication information, the gap indication list or the fourth gap indication information; or
in response to the network device not configuring the NTN-associated configuration for the terminal device, the first configuration information does not comprise at least one of the second gap indication information, the gap indication list or the fourth gap indication information.

15. The method of any one of claims 1 to 14, further comprising:
configuring scenario indication information, wherein the scenario indication information is used to indicate that the one or more measurement gaps are available for a measurement of the NTN.

16. A measurement gap configuration method, executed by a terminal device, comprising:
receiving one or more pieces of indication information sent by a network device, wherein the one or more pieces of indication information indicate one or more measurement gaps associated with a to-be-measured object.

17. The method of claim 16, wherein receiving the one or more pieces of indication information sent by the network device comprises:
receiving first configuration information sent by the network device, wherein the one or more pieces of indication information are comprised in first configuration information, and the first configuration information comprises a configuration of one or more to-be-measured objects.

18. The method of claim 16, wherein receiving the one or more pieces of indication information sent by the network device comprises:
receiving configuration information about a measurement object sent by the network device, wherein the configuration information about the measurement object is first configuration information.

19. The method of claim 17 or 18, wherein the one or more to-be-measured objects comprise a measurement object, or different reference signals in a measurement object.

20. The method of claim 18, wherein the first configuration information is configured with one or more of first gap indication information or second gap indication information associated with the one or more to-be-measured objects respectively.

21. The method of claim 20, wherein the first gap indication information and the second gap indication information are both used to indicate a measurement gap associated with the one or more to-be-measured objects and applied to a NTN.

22. The method of claim 20, wherein the first configuration information is configured with a gap indication list associated with the one or more to-be-measured objects, and the gap indication list comprises n pieces of third gap indication information.

23. The method of claim 22, wherein the n pieces of third gap indication information are used to indicate different measurement gaps applied to a NTN.

24. The method of claim 16, wherein the one or more pieces of indication information further indicates, in addition to the one or more measurement gaps associated with the to-be-measured object, one or more of a to-be-measured cell, a to-be-measured cell group, a to-be-measured cell list, a to-be-measured cell group list, a SMTC, a SMTC list, a satellite, or a satellite list associated with the one or more measurement gaps indicated by the one or more pieces of indication information.

25. The method of claim 19, wherein the reference signal comprises at least one of:
a SSB; or
a CSI-RS.

26. The method of claim 19, wherein the configuration information about the measurement object comprises a SMTC configuration list, and the SMTC configuration list comprises at least one SMTC configuration;
wherein the configuration information about the measurement object is configured with fourth gap indication information associated with one or more SMTC configurations in the SMTC configuration list; and the fourth gap indication information is used to indicate an associated measurement gap.

27. The method of claim 16, wherein the one or more pieces of indication information are conditionally present;
wherein in response to meeting a presence condition of the one or more pieces of indication information, the one or more pieces of indication information are optionally or mandatorily present; and
in response to not meeting the presence condition of the one or more pieces of indication information, the one or more pieces of indication information are absent.

28. The method of claim 27, wherein the presence condition of the one or more pieces of indication information comprises:
that the network device configures a NTN-associated configuration for the terminal device; and/or
that the to-be-measured object is used for a measurement of a NTN cell.

29. The method of any one of claims 20, 22, 26, 27 or 28, wherein in response to the network device configuring the NTN-associated configuration for the terminal device, the first configuration information comprises at least one of the second gap indication information, the gap indication list or the fourth gap indication information; or
in response to the network device configuring the NTN-associated configuration for the terminal device, the first configuration information comprises at least one of the second gap indication information, the gap indication list or the fourth gap indication information, or does not comprise at least one of the second gap indication information, the gap indication list or the fourth gap indication information; or
in response to the network device not configuring the NTN-associated configuration for the terminal device, the first configuration information does not comprise at least one of the second gap indication information, the gap indication list or the fourth gap indication information.

30. A communication apparatus, configured in a network device, comprising:
a transceiver module configured to send one or more pieces of indication information to a terminal device, wherein the one or more pieces of indication information indicate one or more measurement gaps associated with a to-be-measured object.

31. A communication apparatus, configured in a terminal device, comprising:
a transceiver module configured to receive one or more pieces of indication information sent by a network device, wherein the one or more pieces of indication information indicate one or more measurement gaps associated with a to-be-measured object.

32. A communication apparatus, comprising a processor and a memory, wherein the memory stores therein a computer program, and the processor executes the computer program stored in the memory to implement the indication information configuration method according to any one of claims 1 to 14, or the processor executes the computer program stored in the memory to implement the measurement gap configuration method according to any one of claims 15 to 29.

33. A communication apparatus, comprising a processor and an interface circuit,
wherein the interface circuit is configured to receive a code instruction and transmit the code instruction to the processor, and
the processor is configured to execute the code instruction to implement the indication information configuration method according to any one of claims 1 to 14, or execute the code instruction to implement the measurement gap configuration method according to any one of claims 15 to 29.

34. A computer-readable storage medium storing therein an instruction, wherein the instruction is executed to implement the indication information configuration method according to any one of claims 1 to 14, or implement the measurement gap configuration method according to any one of claims 15 to 29.
